# EUROPEAN PATENT SPECIFICATION

(11) **EP 3 634 678 B1**
(45) Date of publication and mention of the grant of the patent: **07.08.2024**
(21) Application number: 18735143.2
(22) Date of filing: 11.06.2018
(51) Int. Cl.: B23K 9/095, B23K 9/10, B23K 9/173, B23K 35/40, C21D 8/06, B21C 1/16, B21C 1/20, B21C 37/04

(54) **METHODS AND SYSTEMS TO HEAT A WIRE FOR REDUCING THE HYDROGEN CONTENT**
VERFAHREN UND SYSTEME ZUM ERWÄRMEN EINES DRAHTS ZUR VERRINGERUNG DES WASSERSTOFFGEHALTS
PROCÉDÉS ET SYSTÈMES DE CHAUFFAGE D'UN FIL POUR EN RÉDUIRE LA TENEUR EN HYDROGÈNE

(30) Priority: 09.06.2017 US 201762517507 P
(43) Date of publication of application: 15.04.2020
(73) Proprietor: Illinois Tool Works Inc., Glenview, IL 60025 (US)
(72) Inventor: BARHORST, Steven, Glenview, Illinois 60025 (US); BUNDY, Joseph C., Glenview, Illinois 60025 (US)
(74) Representative: HGF
(86) International application number: PCT/US2018/036900
(87) International publication number: WO 2018/227186

(56) References cited:
- EP-A2- 0 204 559
- US-A1- 2014 366 721
- US-A1- 2015 213 921
- US-B2- 7 626 139
- N.A.: "Drahtglühe", 23 August 2016 (2016-08-23), Wikipedia, XP055510057, Retrieved from the Internet <URL:https://de.wikipedia.org/w/index.php?title=Drahtgl%C3%BChe&oldid=157333005> [retrieved on 20180926]

## Description

### FIELD

The present disclosure generally relates to systems, and methods to preheat welding wire to reduce the amount of hydrogen in solidified welds and to make such welds less susceptible to hydrogen induced cracking (HIC) and hydrogen embrittlement.

### BACKGROUND

Welding is a process that has increasingly become ubiquitous in all industries. Welding is, at its core, simply a way of bonding two pieces of metal. A wide range of welding systems and welding control regimes have been implemented for various purposes. In continuous welding operations, metal inert gas (MIG) welding and submerged arc welding (SAW) techniques allow for formation of a continuing weld bead by feeding welding wire shielded by inert gas or granular flux from a welding torch. Such wire feeding systems are available for other welding systems, such as tungsten inert gas (TIG) welding. Electrical power is applied to the welding wire and a circuit is completed through the workpiece to sustain a welding arc that melts the electrode wire and the workpiece to form the desired weld.

US-7626139-B2 discloses a method of manufacturing a seamed flux-cored welding wire having both favorable feedability and low hydrogen content characteristic. The method comprises the steps of: drawing a tube-like formed wire including a flux filled therein using a lubricant; removing the lubricant from the drawn wire by a physical means; and coating a lubricant (coating an oil) for wire feeding on the wire surface. The respective steps are carried out in an in-line manner. In the wire drawing step, a wire drawing lubricant containing a sulfur-bearing high-pressure lubricant is used, and the overall wire drawing from the tube-like formed wire to a roughly product-diameter wire is carried out by means of a roller die.

### SUMMARY

The present disclosure relates to a wire preheating system, and method for use with a welding torch, more particularly, to systems, methods, and apparatus to preheat welding wire for low hydrogen welding. The scope of the present invention is defined by the appended claims.

### BRIEF DESCRIPTION OF THE DRAWINGS

The following is a description of the examples depicted in the accompanying drawings. The figures are not necessarily to scale, and certain features and certain views of the figures may be shown exaggerated in scale or in schematic in the interest of clarity or conciseness.
Figure 1 illustrates an example robotic welding system.
Figure 2 is a block diagram of an example assembly to preheat a section of the electrode wire to reduce hydrogen prior to welding, in accordance with aspects of this disclosure.
Figure 3 illustrates another example system including a preheating circuit having contact points at both a wire feeder and a torch assembly, in accordance with aspects of this disclosure.
Figure 4 illustrates another example system including multiple preheating circuits, in accordance with aspects of this disclosure.
Figure 5 illustrates another example system including a preheating circuit and a wire cooling device, in accordance with aspects of this disclosure.
Figure 6A illustrates an example wire manufacturing system configured to reduce hydrogen during manufacturing of the welding wire, in accordance with aspects of this disclosure.
Figure 6B illustrates an example wire packaging system configured to reduce hydrogen in a welding wire, in accordance with aspects of this disclosure.
Figure 7 is a block diagram of an example implementation of the power supplies of Figures 2, 3, 4, and/or 5.
Figure 8 is a flowchart representative of an example method to reduce hydrogen in a welding wire by heating the wire, in accordance with aspects of this disclosure.
Figure 9 is a flowchart representative of an example method 900 to reduce hydrogen in a welding wire, in accordance with aspects of this disclosure.

The figures are not to scale. Where appropriate, the same or similar reference numerals are used in the figures to refer to similar or identical elements.

### DETAILED DESCRIPTION

In the following detailed description, specific details may be set forth in order to provide a thorough understanding of embodiments of the present disclosure. However, it will be clear to one skilled in the art when disclosed examples may be practiced without some or all of these specific details. For the sake of brevity, well-known features or processes may not be described in detail. In addition, like or identical reference numerals may be used to identify common or similar elements.

Hydrogen embrittlement is a process by which metals lose toughness, become brittle, and/or fracture due to the presence and diffusion of hydrogen. The pressure on the workpiece, caused at least in part by hydrogen introduced by a filler wire such as welding electrodes, can build up. When the pressure exceeds a threshold level, the workpiece can crack in a mechanism referred to as hydrogen-induced cracking. Through the process of welding, metals can pick up hydrogen through the usage of welding filler materials which have been exposed to moisture and/or otherwise forming hydrocarbons.

Tubular welding wire generally provide more difficulties than solid welding wire in controlling the level of moisture during manufacture, and may have more tendency to pick up moisture during storage and/or field use. When welding with seamed wire, an operator and/or other material handling personnel must take extra care to avoid submitting filler material to sources which can increase risk of hydrogen cracking.

Conventional methods of reducing the risk of hydrogen cracking and minimizing hydrogen in welds include 1) convection baking of the welding wire and 2) holding an extended stickout while welding. Both of these methods allow for the boiling off of hydrogen, either by radiated heat or resistive wire heating (e.g., I2R heating).

Common seamed wires which are often used in applications such as shipbuilding, pipelines, and/or structural welding, which can be susceptible to hydrogen cracking, include FabCO XL550 (E71T-1CJ/-9CJ/-12CJ H4), Fabshield 81N1 (E71T8-Ni1 J H8), and FabCOR 86R (E70C-6M H4).

Disclosed examples involve resistively preheating the electrode wire after unwinding from the wire spool and prior to the arc. For example, the electrode wire may be preheat via contact points located at any two points between the wire source and the arc. The contact points may be implemented using any technique to establish electrical contact with the electrode wire, such as contact tips, conductive brushes, and/or conductive rollers. Some other disclosed examples involve resistively preheating the wire during the wire drawing (e.g., manufacturing) process to immediately reduce the hydrogen in the drawn wire. Disclosed examples therefore are capable of delivering wire to welding applications that substantially reduce risks of cracking and embrittlement in welds that use the preheated wire.

Disclosed examples include one or more preheating circuits in addition to a welding circuit, which are controlled to provide current to preheat the electrode. Preheating a welding electrode provides a number of potential benefits, which are described in U.S. Patent Application No. 15/343,992, filed November 4, 2016, and entitled "Systems, Methods, and Apparatus to Preheat Welding Wire." In addition to provide such benefits, disclosed examples use one or more preheating circuits to reduce the hydrogen content in a welding wire by increasing the rate of hydrogen diffusion from the wire.

In some examples, the preheating circuit includes multiple contact tips, which may be positioned in contact with the electrode wire at the welding torch, at a wire feeder, between the wire feeder and the welding torch, and/or any combination of the welding torch, the wire feeder, or between the welding torch and the wire feeder. In some examples, a welding system includes multiple preheating circuits. Different preheating circuits may provide different levels of preheating current. For example, the electrode wire fed from a wire spool may be provided with a first, low preheating current to increase the temperature of the wire to encourage hydrogen diffusion, while maintaining sufficient column strength for feeding the wire without buckling. When the wire approaches the torch, a higher preheating current is applied to increase the wire temperature closer to a melting point of the wire. The currents applied by each of the preheating circuits may be superimposed (e.g., additive or subtractive) in section(s) of the electrode wire, superimposed (e.g., additive or subtractive) at one or more contact tips or other contact points, or non-overlapping. Additionally or alternatively, the welding current may be superimposed on one or more preheating currents and/or non-overlapping with the preheating current(s).

Disclosed examples control the preheating current in the wire via control loops (e.g., voltage-controlled loops, current-controlled loops, etc.) to reduce the level of hydrogen in a consistent manner over a relatively short period of time compared to conventional baking and compared to conventional extended stickout techniques. In some examples, the preheating current is controlled based on aspects of the wire such as wire type, wire composition, and/or wire diameter, a length of the wire path from the wire feeder to the arc, wire feed speed, and/or any other control variables affecting hydrogen diffusion. A look-up table can be implemented to recall optimum preheat parameters for certain types of tubular wire and wire feed rate.

In some examples, a hydrogen sensor may be added to monitor the level of hydrogen. For example, Palladium (Pd) based (e.g., Pd-functionalized) carbon nanotube (CNT), a diode-based Schottky sensor with Pd-alloy gate, and/or a highly-ordered vertically oriented titanium dioxide (TiO2) nanotube microelectromechanical systems (MEMS) sensors can be incorporated in the welding torch to detect hydrogen levels and/or perform closed loop control of the preheat power source. A hydrogen sensor may also be placed near the preheat chamber as a measure of hydrogen level before depositing the consumable electrode into weld pool to form the weld metal.

Disclosed example methods include drawing a supply material through a die to form a wire, and applying electrical current to a portion of the wire to reduce a hydrogen content of the wire.

Some example methods further include storing the wire in a wire package after applying the electrical current. In some example methods, the applying of the electrical current to the portion of the wire is in line with the drawing of the supply material through the die. In some examples, the drawing of the supply material through the die and the applying of the electrical current to the portion of the wire are performed between a supply of the supply material and a storage of a finished wire product.

Some example methods further include cleaning a lubricant from the wire by applying the electrical current. Some example methods further include controlling the electrical current using a voltage-controlled loop based on a target voltage. In some examples, the controlling of the electrical current comprises selecting the target voltage based on at least one of a wire type, a wire construction, a wire diameter, a strip composition, a flux composition, a thickness of a strip portion of the wire, a width of the strip portion of the wire, and/or a measured resistance.

Some example methods further include controlling the electrical current using a current-controlled loop based on a target current. Some example methods further include measuring a temperature of the wire and controlling the electrical current based on the measured temperature. In some examples, the applying of the electrical current to the portion of the wire is performed in line with packaging of the wire.

Disclosed example wire drawing systems include: a die; one or more drive rolls configured to draw a supply material through the die to form a wire; and a heating system, including: at least two contact points configured to make electrical contact with the wire formed using the die; and a heating power supply configured to provide electrical current to the wire via the at least two contact points.

In some example systems, the at least two contact points are configured to make contact with the wire in line with the die. In some examples, the at least two contact points are configured to make contact with the wire in line with packaging of the wire. In some examples, the drive rolls, the die, and the at least two contact points are positioned between a supply of the supply material and a storage of a finished wire product.

Some example systems further include a heating controller configured to control the heating power supply using a voltage-controlled loop based on a target voltage. In some examples, the heating controller is configured to select the target voltage based on at least one of a wire type, a wire construction, a wire diameter, a strip composition, a flux composition, a thickness of a strip portion of the wire, and/or a width of the strip portion of the wire. Some example systems further include a resistance sensor configured to measure a resistance of the wire, in which the heating controller configured to select the target voltage based on the measured resistance. Some example systems further include a temperature sensor configured to measure a temperature of the wire, in which the heating controller configured to select the target voltage based on the measured temperature.

Some example wire drawing systems further include a heating controller configured to control the heating power supply using a current-controlled loop. Some example systems further include a second die in line with the first die.

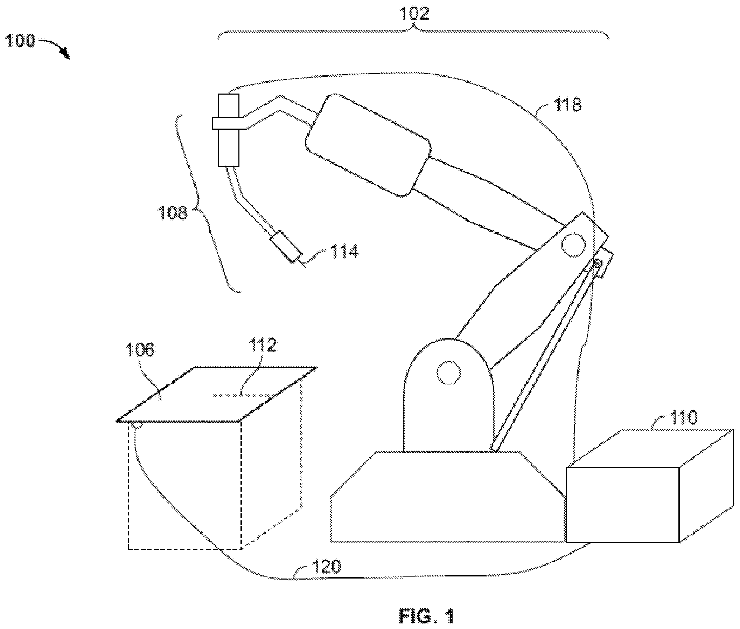

Referring to Figure 1, an example welding system 100 is shown in which a robot 102 is used to weld a workpiece 106 using a welding tool 108, such as the illustrated bent-neck (i.e., gooseneck design) welding torch (or, when under manual control, a handheld torch), to which power is delivered by welding equipment 110 via conduit 118 and returned by way of a ground conduit 120. The welding equipment 110 may comprise, inter alia, one or more power sources (each generally referred to herein as a "power supply"), a source of a shield gas, a wire feeder, and other devices. Other devices may include, for example, water coolers, fume extraction devices, one or more controllers, sensors, user interfaces, communication devices (wired and/or wireless), etc.

The welding system 100 of Figure 1 may form a weld (e.g., at weld joint 112) between two components in a weldment by any known electric welding techniques. Known electric welding techniques include, inter alia, shielded metal arc welding (SMAW), MIG, flux-cored arc welding (FCAW), TIG, laser welding, sub-arc welding (SAW), stud welding, friction stir welding, and resistance welding. MIG, TIG, hot wire cladding, hot wire TIG, hot wire brazing, multiple arc applications, and SAW welding techniques, inter alia, may involve automated or semi-automated external metal filler (e.g., via a wire feeder). In multiple arc applications (e.g., open arc or sub-arc), the preheater may pre-heat the wire into a pool with an arc between the wire and the pool. Optionally, in any embodiment, the welding equipment 110 may be arc welding equipment having one or more power supplies, and associated circuitry, that provides a direct current (DC), alternating current (AC), or a combination thereof to an electrode wire 114 of a welding tool (e.g., welding tool 108). The welding tool 108 may be, for example, a TIG torch, a MIG torch, or a flux cored torch (commonly called a MIG "gun"). The electrode wire 114 may be tubular-type electrode, a solid type wire, a flux-core wire, a seamless metal core wire, and/or any other type of electrode wire.

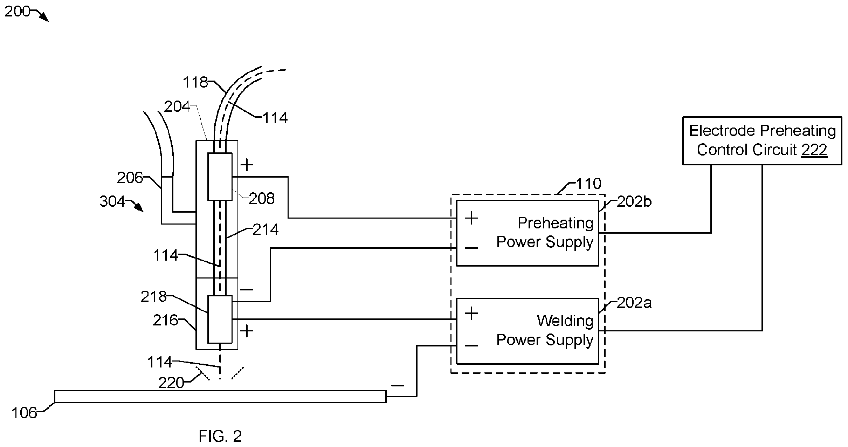

As will be discussed below, the welding tool 108 may employ a contact tip assembly 200 that heats the electrode wire 114 prior to forming a welding arc 220 using the electrode wire 114. Suitable electrode wire 114 types include, for example, tubular wire, metal cored wire, aluminum wire, solid gas metal arc welding (GMAW) wire, composite GMAW wire, gas-shielded FCAW wire, SAW wire, self-shielded wire, etc. In one aspect, the electrode wire 114 may employ a combination of tubular wire and reverse polarity current, which increases the metal transfer stability by changing it from globular transfer to a streaming spray. By preheating prior to wire exiting the first tip and fed in the arc (where the material transfer takes place), the tubular electrode wire 114 acts more like a solid wire in that the material transfer is a more uniform spray or streaming spray. Moreover, there is a reduction in out-gassing events and very fine spatter-causing events, which are normally seen while welding with metal core wire. Such a configuration enables the tubular wire to function in a manner similar to a solid wire type streaming spray. Yet another benefit of preheating is alleviating wire flip due to poor wire cast and helix control in wire manufacturing (which may be more pronounced in tubular wire than solid wire) because the undesired wire twist will be reduced in the preheating section. FIG. 2

Figure 2 illustrates a functional diagram of an exemplary contact tip assembly 200, which may be used with welding system 100, whether robotic or manually operated. As illustrated, the contact tip assembly 200 may comprise a body 204, a gas shielding inlet 206, a first contact tip 218, a ceramic guide 214, a gas nozzle 216, and a second contact tip 208. While the body portion 204 illustrated as a single components, one of skill in the art, having reviewed the present disclosure, would recognize that the body portion 204 may be fabricated using any number of components. In certain aspects, the contact tip assembly 200 may be added to an existing welding torch. For example, the contact tip assembly 200 can be attached to a distal end of a standard welding setup and then used for resistive preheating. Similarly, the contact tip assembly 200 may be provided as a PLC retrofit with custom software, thereby enabling integration with existing systems that already have power sources and feeders.

In some examples, the first contact tip 218 and/or the second contact tip 208 are modular and/or removable so as to be easily serviceable by a user of the welding system 100. For example, the first contact tip 218 and/or the second contact tip 208 may be implemented as replaceable cartridges. In some examples, the welding equipment 110 monitors identifies one or more indicators that the first contact tip 218 and/or the second contact tip 208 should be replaced, such as measurements of the used time of the first contact tip 218 and/or the second contact tip 208, temperature(s) of the first contact tip 218 and/or the second contact tip 208, amperage in the first contact tip 218 and/or the second contact tip 208 and/or the wire, voltage between the first contact tip 218 and/or the second contact tip 208 and/or the wire, enthalpy in the wire, and/or any other data.

In operation, the electrode wire 114 passes from the body portion 204 through a first contact tip 218 and a second contact tip 208, between which a second power supply 202b generates a preheat current to heat the electrode wire 114. Specifically, the preheat current enters the electrode wire 114 via the second contact tip 208 and exits via the first contact tip 218. At the first contact tip 218, a welding current may also enter the electrode wire 114. The welding current is generated, or otherwise provided by, a first power supply 202a. The welding current exits the electrode wire 114 via the workpiece 106, which in turn generates the welding arc 220. That is, the electrode wire 114, when energized for welding via a welding current, carries a high electrical potential. When the electrode wire 114 makes contact with a target metal workpiece 106, an electrical circuit is completed and the welding current flows through the electrode wire 114, across the metal work piece(s) 106, and to ground. The welding current causes the electrode wire 114 and the parent metal of the work piece(s) 106 in contact with the electrode wire 114 to melt, thereby joining the work pieces as the melt solidifies. By preheating the electrode wire 114, a welding arc 220 may be generated with drastically reduced arc energy. The preheat current can range from, for example, 75 A to 400 A, when the distance between electrodes is 5.5 inches. Generally speaking, the preheat current is inversely proportional to the square root of the distance between the two contact tips and/or directly proportional to the electrode wire 114 size for a given rise in electrode temperature. That is, the smaller the distance, the more current needed to achieve a certain temperature rise. The preheat current may flow in either direction between the contact tips 208, 218.

To avoid unwanted kinking, buckling, or jamming of the electrode wire 114, a guide 214 may be provided to guide the electrode wire 114 as it travels from the second contact tip 208 to the first contact tip 218. The guide 214 may be fabricated from ceramic, a dielectric material, a glass-ceramic polycrystalline material, and/or another non-conductive material. The contact tip assembly 200 may further comprise a spring-loaded device, or equivalent device, that reduces wire kinking, buckling, and jamming, while increasing wire contact efficiency by keeping the electrode wire 114 taught and/or straight.

In certain aspects, the second contact tip may be positioned at the wire feeder (e.g., at welding equipment 110) or another extended distance, to introduce the preheat current, in which case the preheat current may exit a contact tip in the torch 108. The contact tip in the torch 108 may be the same, or different, from the contact tip where the welding current is introduced to the electrode wire 114. The preheat contact tip(s) may be further positioned along the electrode wire 114 to facilitate use with Push-Pull Guns, such as those available from Miller Electric of Appleton, Wisconsin. The liner could be made from ceramic rollers so the preheat current could be injected back at the feeder and be a very low value due to the length of the liner.

The welding current is generated, or otherwise provided by, a first power supply 202a, while the preheat current is generated, or otherwise provided by, a second power supply 202b. The first power supply 202a and the second power supply 202b may ultimately share a common power source (e.g., a common generator or line current connection), but the current from the common power source is converted, inverted, and/or regulated to yield the two separate currents - the preheat current and the welding current. For instance, the preheat operation may be facilitated with a single power source and associated converter circuitry. In which case, three leads may extend from the welding equipment 110 or an auxiliary power line in the welder, which could eliminate the need for the second power supply 202b.

In certain aspects, in lieu of a distinct contact tip assembly 200, the first contact tip 218 and a second contact tip 208 may be positioned on each side of the gooseneck bend. For example, a preheat section may be curved (e.g., non-straight). That is, wire is fed through a section of the torch that has a bend greater than 0 degrees or a neck that would be considered a "gooseneck". The second contact tip 208 may be positioned before the initial bend and the first contact tip 218 after the bend is complete. Such an arrangement may add the benefit to the connectivity of the heated wire moving through the portion of the neck between the two contact tips. Such an arrangement results in a more reliable connection between the two contact tips where an off axis, machined dielectric insert was previously needed.

The preheat current and welding current may be DC, AC, pulsed DC, and/or a combination thereof. For example, the welding current may be AC, while the preheat current may be DC, or vice versa. Similarly, the welding current may be DC electrode negative (DCEN) or a variety of other power schemes. In certain aspects, the welding current waveform may be further controlled, including constant voltage, constant current, and/or pulsed (e.g., AccuPulse). In certain aspects, constant voltage and/or constant power, constant penetration, and/or constant enthalpy may be used to facilitate preheat instead of constant current. For example, it may be desirable to control the amount of penetration into the workpiece. In certain aspects, there may be variations in contact tip to work distances that under constant voltage weld processes will increase or decrease the weld current in order to maintain a voltage at or close to the target voltage command, and thus changing the amount of penetration/heat input into the weld piece. By adjusting the amount of preheat current in response to changes to contact tip to work changes the penetration/heat input can be advantageously controlled. Furthermore, penetration can be changed to reflect a desired weld bead/penetration profile. For example, the preheat current may be changed into a plurality of waveforms, such as, but not limited to, a pulse type waveform to achieve the desired weld bead/penetration profile.

The current could be line frequency AC delivered from a simple transformer with primary phase control. Controlling the current and voltage delivered to the preheat section may be simpler using a CC, CV, or constant power depending on how the control is implemented as well as the power supply configuration to do it. In another aspect, the welding power source for consumable arc welding (GMAW and SAW) may include regulating a constant welding current output and adapt wire speed to maintain arc length or arc voltage set-point (e.g., CC+V process control). In yet another aspect, the welding power source may include regulating a constant welding voltage output (or arc length) and adapt wire speed to maintain arc current set-point (e.g., CV+C process control). The CC+V and CV+C process controls allow for accommodation of wire stick-out variation and pre-heat current/temperature variation by adapting wire feed speed (or variable deposition). In yet another aspect, the power source may include regulating a constant welding current output, the feeder maintains constant deposition, and the pre-heat power source adapts preheat current (or pre-heat power) to maintain constant arc voltage (or arc length). It can be appreciated that the addition of pre-heat current/power adds a new degree of freedom to the wire welding processes (GMAW and SAW) that allows flexibility and controllability in maintaining constant weld penetration and weld width (arc current), deposition (wire speed) and process stability (arc length or voltage). These control schemes may be switched during the welding process, for example, CV+C for arc start only, and other control schemes for the main weld.

The welding system 100 may be configured to monitor the exit temperature of the electrode wire 114 between the preheat contact tips (e.g., the preheat temperature), as illustrated, between the first contact tip 218 and the second contact tip 208. The preheat temperature may be monitored using one or more temperature determining devices, such as a thermometer, positioned adjacent the electrode wire 114, or otherwise operably positioned, to facilitate periodic or real-time feedback. Example thermometers may include both contact sensors and non-contact sensors, such as non-contact infrared temperature sensors, thermistors, and/or thermocouples. An infrared thermometer determines temperature from a portion of the thermal radiation emitted by the electrode wire 114 to yield a measured preheat temperature. The temperature determining device may, in addition to or in lieu of the thermometers, comprise one or more sensors and/or algorithms that calculate the preheat temperature of the electrode wire 114. For example, the system may dynamically calculate temperature based on, for example, a current or voltage. In certain aspects, the thermometer may measure the temperature of the dielectric guide or first contact tip to infer the wire temperature.

In operation, the operator may set a target predetermined preheat temperature whereby the welding system 100 dynamically monitors the preheat temperature of the electrode wire 114 and adjusts the preheat current via the second power supply 102b to compensate for any deviation (or other difference) of the measured preheat temperature from the target predetermined preheat temperature. Similarly, controls may be set such that a welding operation cannot be performed until the electrode wire 114 has been preheated to the predetermined preheat temperature.

The example assembly 200 preheats a section of the electrode wire 114 to reduce the presence of hydrogen in the electrode wire 114 prior to welding. In some examples, the assembly 200 may monitor hydrogen levels in the electrode wire 114 and preheat a section of the electrode wire 114 to reduce hydrogen prior to welding. The assembly 200 includes an electrode preheating control circuit 222. The electrode preheating control circuit 222 is operable to control the preheating power supplied by the power supply 202b to maintain a substantially constant heat input to a weld (e.g., a heat input within a range). In some examples, the electrode preheating control circuit 222 controls the preheating power based on estimating the stickout heating of the electrode wire 114 and by modifying the preheating power provided by the power supply 202b based on changes in the estimated stickout heating.

In some examples, the electrode preheating control circuit 222 receives a hydrogen measurement signal from a hydrogen sensor and adjusts the preheat parameters (e.g., current, voltage, power, enthalpy, etc.) of the preheating power supply 202b and/or the welding parameters of the welding power supply 202a.

By preheating the electrode wire 114 to a desired temperature at speed at which the electrode wire 114 is feeding out of the assembly 200, relative to the amount of hydrogen present or allowable, the assembly 200 more easily reduces and/or eliminates excess hydrogen than conventional methods of hydrogen reduction.

The electrode preheating control circuit 222 controls the preheat parameters, such as preheat power, current, voltage and/or joule heating, based on observed baking effectiveness for the type of electrode wire to reduce moisture in the type of electrode wire, and based on the feed speed of the electrode wire 114. For instance, a higher feed rate of the electrode wire 114 may require higher preheat power. Welding with tubular electrodes on butt seams may require less preheat power than tubular electrodes with a joggle joint. Larger diameter tubular wire with more cross-sectional area may require higher preheat power.

The example electrode preheating control circuit 222 may use a look-up table or other memory structure to retrieve preheat parameters based on inputs to the electrode preheating control circuit 222 (e.g., via a user interface or another input method). For example, the electrode preheating control circuit 222 may use a wire feed speed, a wire type (e.g., tubular wire, solid wire, a wire name, etc.), and/or a wire diameter, to identify in the table one or more of a preheating current, a preheating voltage, a preheating enthalpy, a wire temperature, and/or a wire resistance (e.g., indicative of the temperature of the wire) to be used to control the preheating power supply 202b. The wire type may be identified, for example, using a model number, universal product code (UPC), and/or any a physical description of the wire. In addition to diameter, composition, and wire feed speed, the resistance of the wire may also be included as a variable for determining the preheat. For example, the sheath thickness of a tubular wire and/or a fill percentage (e.g., the ratio of core material weight to sheath weight) at least partially determines the resistance of the wire. The preheating distance may be an input, fixed, and/or dynamically controllable and, therefore, may be used as an input variable for the look-up table. The data in the look-up tables may be determined empirically by testing different wire types to determine hydrogen content using different resistive heating levels and/or time periods.

When included, a hydrogen sensor monitors the level of hydrogen on and/or proximate to the electrode wire 114. For example, the hydrogen sensor may be a Palladium (Pd) based sensor such as a Palladium-functionalized carbon nanotube (CNT). Another example implementation of the hydrogen sensor is as a diode-based Schottky sensor with a Pd-alloy gate. Additionally or alternatively, highly-ordered vertically oriented titanium dioxide (TiO2) nanotube microelectromechanical systems (MEMS) sensors may be incorporated in the welding torch to detect low levels (e.g., in parts per million, parts per billion, etc.) of hydrogen in or proximate to the electrode wire 114. The electrode preheating control circuit 222 may perform closed-loop control of the preheating power supply 202b based on the hydrogen measurement received from the hydrogen sensor. A hydrogen sensor may also be placed near a preheat chamber as a measure of hydrogen level before depositing the electrode wire 114 into the weld pool at the workpiece 106 to form the weld metal. A moisture sensor may be used instead of or as a complement to the hydrogen sensor.

The example assembly 200 allows a tubular electrode to be produced at low cost and yet achieve low hydrogen performance. The assembly 200 may also reduce the cost of reducing or preventing hydrogen pick up during production of the electrode wire 114, such as the costs associated with strip steel quality, drawing lube, flux sourcing and storage, and/or other production, storage and/or procurement costs can be minimized. Furthermore, the cost of packaging and/or storage against moisture pick up in the electrode wire 114 can be reduced and the shelf life of the electrode wire 114 can be extended.

Because hydrogen reduction is improved, a greater variety of tubular wires can be selected by fabricators for mechanical properties with hydrogen immunity provided by the example assembly providing wire preheating at the weld torch. The reduction of hydrogen is made easier because it is not dependent on stickout length as in conventional techniques. End users cannot typically regulate stickout length in a consistent manner, so performing hydrogen reduction via preheating allows for a fixed, self-regulated preheat length so that the wire heating will be consistent and not reliant on stickout length. The shorter stickout length also improves the response to shorting and/or stubbing events by the welding power supply 202a. The preheat hydrogen reduction method further eliminates the need to pre-bake the electrode wire 114 for a significant period of time before using the wire 114. The preheat hydrogen reduction method can heat the electrode wire 114 more than possible when using a traditional extended stickout method, further reducing hydrogen levels prior to introduction to the weld than conventional methods.

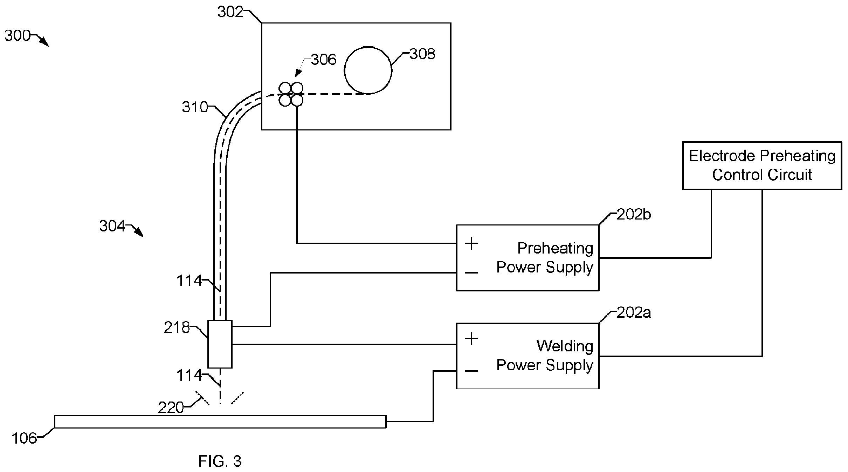

Figure 3 illustrates another example system 300 including a preheating circuit having contact points at both a wire feeder 302 and a torch assembly 304. The torch assembly 304 is illustrated as a block diagram in Figure 3, but may include one or more features of the assembly 200 of Figure 2 not specifically discussed below.

The example wire feeder 302 includes a wire drive 306 and a wire spool 308 storing the electrode wire 114. The wire drive 306 pulls the electrode wire 114 from the wire spool 308 and feeds the electrode wire 114 to the torch assembly 304 via a cable 310. The cable 310 may include vents to permit the hydrogen to escape the interior of the cable 310. The vents may avoid saturation of hydrogen within the cable 310 and permit the electrode wire 114 to continue diffusing hydrogen.

The preheating power supply 202b supplies preheating current to the electrode wire 114 between the contact tip 218 and the wire feeder 302 (e.g., via conductive rollers in the wire drive 306 and/or via a contact tip in the wire feeder 302). The preheating power supply 202b may provide a relatively low preheat current due to the time required for the electrode wire 114 to traverse the distance from the wire drive 306 (or contact tip) in the wire feeder 302 and the contact tip 218, to avoid melting the electrode wire 114 or causing buckling due to reduction in column strength of the electrode wire 114.

The example electrode preheating control circuit 222 controls the preheating of the electrode wire 114 based on, for example, the distance between the contact tips, one or more characteristics of the electrode wire 114, and/or the wire feed speed. In some examples, the electrode preheating control circuit 222 disables preheating when the wire feed speed is less than a threshold speed, to avoid melting the electrode wire 114.

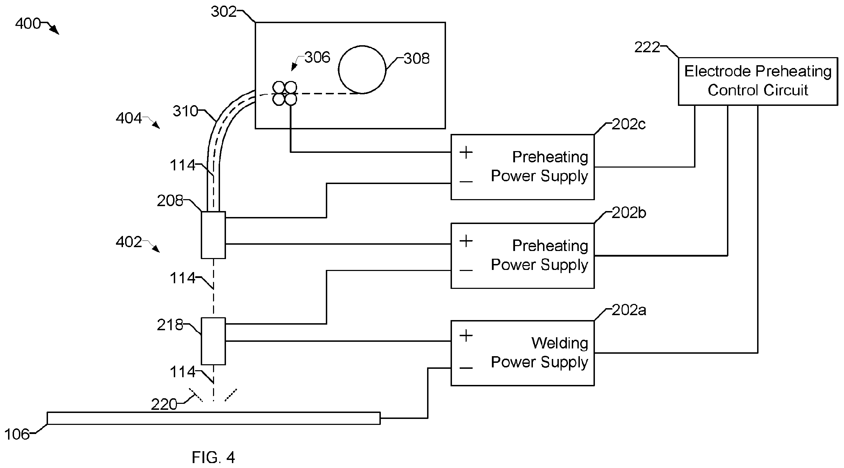

Figure 4 illustrates another example system 400 including multiple preheating circuits. The example system 400 includes the wire feeder 302, the cable 310, and the contact tips 208, 218 of Figures 2 and 3.

The system 400 also includes a second preheating power supply 202c to provide preheating current to a second preheating circuit. A first preheating circuit 402 conducts preheating current from the preheating power supply 202b through the electrode wire 114 via the contact tips 208, 218. A second preheating circuit 404 conducts preheating current through the electrode wire 114 via the contact tip 208 and the wire feeder 302 (e.g., the wire drive 306, a contact tip, or another contactor).

The second preheating circuit 404 provides a lower current for a longer distance to reduce hydrogen in the electrode wire 114 prior to welding. The first preheating circuit 402 may provide a higher current to increase the temperature of the electrode wire 114 closer to a melting point of the wire. The example electrode preheating control circuit 222 coordinates the preheating between the first and second preheating circuits 402, 404. For example, as the current in the second preheating circuit 404 increases (e.g., to increase hydrogen diffusion in the electrode wire 114), the electrode preheating control circuit 222 controls the preheating power supply 202b to reduce the preheating current to avoid losing column strength in the electrode wire and/or melting the electrode wire 114 prior to the arc 220.

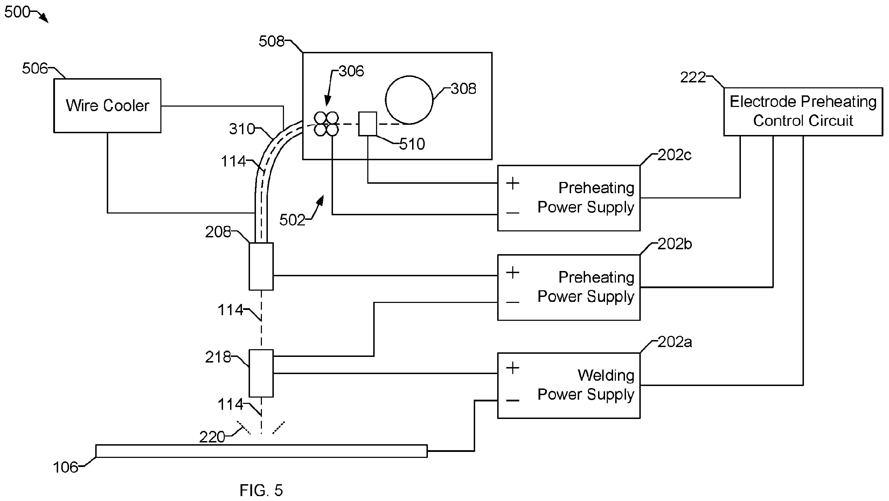

Figure 5 illustrates another example system 500 including one or more preheating circuits 502, 504 and a wire cooling device 506. The system 500 includes a wire feeder 508, which includes the wire drive 306 and the wire spool 308 of Figure 3. The wire feeder 508 further includes a contact tip 510 (or other wire contactor) which, in combination with the wire drive 306 and a preheating power supply 202c, implements the first preheating circuit 502. The contact tip 510 may be separate from the wire feeder 508 to, for example, increase a length of the electrode wire 114 being preheated by the first preheating circuit 502. The example preheating circuit 502 may cause hydrogen reduction in the electrode wire 114 as the wire 114 is pulled from the spool 308.

The wire cooling device 506 reduces the temperature of the electrode wire 114 following preheating by the first preheating circuit 502. The reduction in temperature may improve the column strength of the electrode wire 114 after a reduction in the column strength by the first preheating circuit 502. The wire cooling device 506 may provide, for example, gas-based and/or fluid-based cooling to the cable 310 to cool the wire 114 being driven through the cable 310. In some examples, the wire cooling is applied prior to or immediately after a pushing wire drive that could cause buckling in a sufficiently hot electrode wire 114.

The second preheating circuit 504, including the contact tips 208, 218 and the preheating power supply 202b, preheats the electrode wire 114 a second time to a desired temperature for welding.

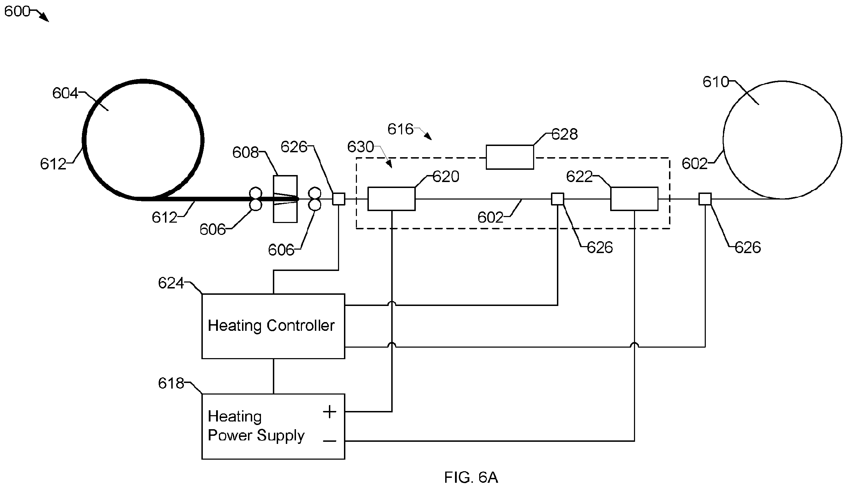

Figure 6A illustrates an example wire manufacturing system 600 configured to reduce hydrogen during manufacturing of a welding wire 602. The wire manufacturing system 600 includes a supply spool 604, one or more wire drives 606, one or more wire drawing dies 608, and a finished spool 610. The wire drive(s) 606 may push and/or pull material. The wire drive(s) 606 push and/or pull a supply material 612 (e.g., large diameter filament, metal strip, or other supply material) from the supply spool 604 through the one or more wire drawing dies 608 to create the smaller diameter wire 614.

Along the manufacturing path between the supply spool 604 and the finished spool 610, a heating circuit 616 applies preheating current to increase the diffusion of hydrogen from the manufactured wire 602. The example heating circuit 616 includes one or more heating power supplies 618 (e.g., the preheating power supplies 202b, 202c of Figures 2-5) and two or more contact points 620, 622 to contact the wire 602. Example contact points include contact tips, conductive rollers (idle or drive rollers), and/or any other type of electrical contact that permits the wire 602 to continue to travel through the manufacturing path.

The example system 600 further includes a heating controller 624. The example heating controller 624 is illustrated as a separate controller but may be implemented in the heating power supply 618. The heating controller 624 may be implemented using a computer, a programmable logic controller, and/or any other type of control and/or logic circuitry. The heating controller 624 receives feedback signals from one or more sensors 626 coupled to the wire 602. The sensors 626 may measure parameters of the wire 602 before the heating circuit 616 (e.g., in the direction of travel of the wire 602), between the contact points 620, 622, and/or after the heating circuit 616 (e.g., in the direction of travel of the wire 602). Example sensors that may be used include resistance sensors, temperature sensors (e.g., optical temperature sensors), voltage sensors, and/or any other type of sensor.

The heating controller 624 controls the heating power supply 618 to output power based on a constant wattage. Additionally or alternatively, the heating controller 624 may control the heating power supply 618 to achieve a target heating temperature at the wire 602. The example heating controller 624 may automatically determine the target heating temperature based on characteristics of the wire 602, such as wire type (e.g., solid wire, flux cored wire, metal cored wire, etc.), wire construction (e.g., amount of fill as a percentage of the weight of the wire 602), wire diameter, strip composition, flux composition, thickness of the strip portion of the wire (for flux cored or metal cored wire), the width of the strip portion of the wire (for flux cored or metal cored wire), and/or measured resistance. The heating controller 624 may adjust a voltage setpoint, a current setpoint, and/or a wattage setpoint based on a measured resistance (e.g., from the sensors 626) of the wire 602.

The system 600 may additionally include other wire manufacturing devices, such as cleaning devices, shaping devices, wire filling devices, tube closing devices, and/or any other desired systems for wire manufacturing. The heating circuit 616 may be placed in any appropriate location to encourage hydrogen diffusion from the wire 602 prior to spooling around the finished spool 610.

The example system 600 drawing a supply material through a die to form the wire 602; applying current to a portion of the wire 602 (e.g., via the heating circuit 616) to reduce a hydrogen content of the wire 602; and, after applying the current, storing the wire 602 in a wire package (e.g., the finished spool 610, a drum, etc.). The wire in the package may later be divided into smaller packages. By placing the heating circuit 616 in line with the manufacturing system 600, hydrogen reduction can be achieved during manufacturing and additional steps to reduce hydrogen from manufactured wire can be reduced or eliminated.

Disclosed example systems may additionally or alternatively be used to improve the vaporization of coatings on electrode wires to improve welding without shielding gas using gasless wires. Conventional gasless wires have a coating which is heated by the arc and/or by heating in the stickout portion of the electrode to create a shielding gas near the arc, thereby shielding the weld puddle. Conventional welding techniques may only vaporize a portion of the coating on a conventional gasless wire. Disclosed example systems increase the vaporization rate of the coating by heating the coating closer to a vaporization point prior to the stickout and the arc. Thus, disclosed example systems may improve shielding using conventional gasless wires and/or may enable the use of gasless wires having a smaller coating layer.

For example, disclosed systems and methods may be used with wire formulations that have reduced fluoride compared to compounds that are used in conventional welding wires. Generally speaking, fluorides are added to wire to control hydrogen content, but degrade arc performance. Therefore, disclosed examples may be used in combination with wires that have fewer or no fluorides to improve arc performance and overall weld quality.

The temperature to which disclosed preheating systems and methods preheat the electrode wire may be based on the contents and/or additives of the electrode wire being heated. For example, the preheat temperature of the wire may be set to: more than 100°C (212°F) to vaporize free moisture (e.g., moisture that is not chemically bonded in the wire); 121°C (250°F) to 260°C (500°F) to vaporize different oil-based lubricants, waxes, paraffins, and/or water-based lubricants; 177°C (350°F) to 343°C (650°F) to vaporize different calcium stearates; and/or 260°C (500°F) to 538°C (1000°F) to vaporize different calcium stearates. The wire preheat temperature may be controlled based on the materials that are desired to be vaporized, while avoiding preheating to a temperature that may cause the wire to lose strength (e.g., a stress-relieving temperature of about 593°C (1100°F) for low carbon steel).

The example system 600 may include a vent system 628 to remove hydrogen from a volume 630 proximate the heating circuit 616. For example, the vent system 628 may draw out moisture from the volume 630 to reduce the amount of hydrogen reabsorbed into the heated wire 602 prior to packaging.

In some examples, one or more lubricants are applied to the supply material 612 and/or to one or more intermediate wires (e.g., wires located between drawing dies). In addition or as an alternative to reducing hydrogen in the wire 602, the heating circuit 616 may heat the wire 602 to vaporize the drawing lubricants from the wire 602. Resistively heating the wire 602 is shorter, provides more consistent results, and is a more energy-efficient method of cleaning the wire 602 than conventional techniques of baking the wire 602.

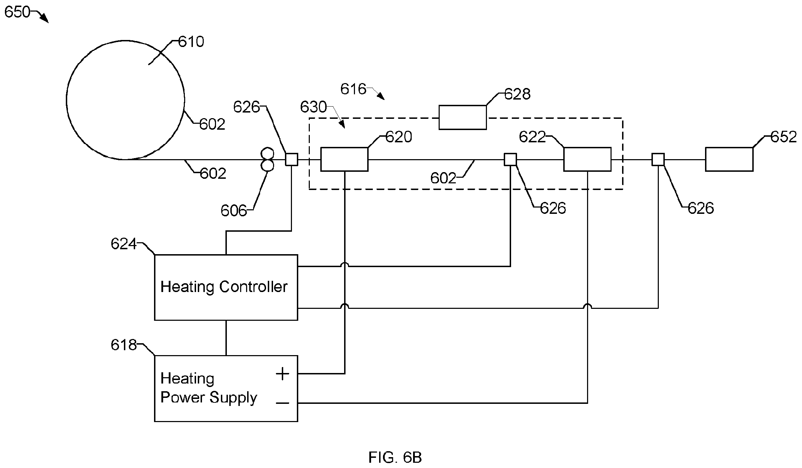

Figure 6B illustrates an example wire packaging system 650 configured to reduce hydrogen in a welding wire. The example wire packaging system 650 may be used instead of or in addition to the example system 600 of Figure 6A to reduce hydrogen in the welding wire 602 and/or to clean the welding wire 602 (e.g., to remove drawing lubricants from the welding wire 602). The system 650 includes drive rolls 606, the finished spool 610 storing the welding wire 602, the heating circuit 616, the heating power supply 618, the contact points 620, 622, the heating controller 624, the sensors 626, and the vent system 628. The drive rolls 606 remove the wire 602 from the finished spool 610 for packaging in a wire packaging 652 (e.g., wire spools, wire drums, pay off packs, and/or any other type of wire packaging). The heating circuit 616 heats the wire 602 using any of the techniques disclosed above with reference to Figure 6A prior to the wire 602 being packaged in the packaging 652.

The example system 650 may include a wire lubricator 654 to lubricate the wire 602, in line with the heating and packaging, with a packaging lubricant and/or other lubricants after the cleaning of the wire 602 with the heating circuit 616.

While the example of Figure 6A describes heating the wire 602, in other examples the heating circuit 616 is applied to heat the supply material 612.

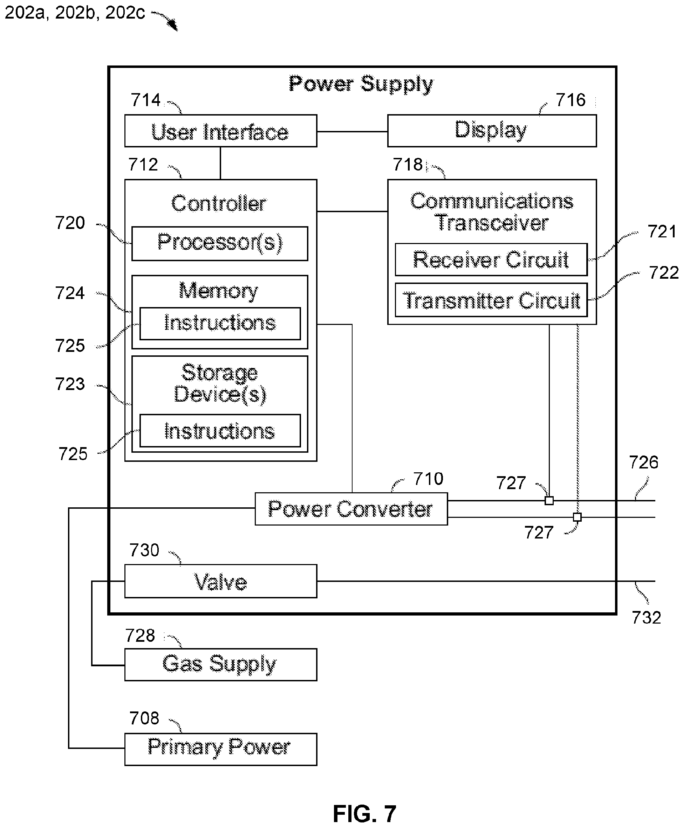

Figure 7 is a block diagram of an example implementation of the power supplies 202a, 202b of Figures 2, 3, 4, and/or 5. The example power supply 202a, 202b powers, controls, and supplies consumables to a welding application. In some examples, the power supply 202a, 202b directly supplies input power to the welding torch 108. In the illustrated example, the welding power supply 202a, 202b is configured to supply power to welding operations and/or preheating operations. The example welding power supply 202a, 202b also provides power to a wire feeder to supply the electrode wire 144 to the welding torch 108 for various welding applications (e.g., GMAW welding, flux core arc welding (FCAW)).

The power supply 202a, 202b receives primary power 708 (e.g., from the AC power grid, an engine/generator set, a battery, or other energy generating or storage devices, or a combination thereof), conditions the primary power, and provides an output power to one or more welding devices and/or preheating devices in accordance with demands of the system. The primary power 708 may be supplied from an offsite location (e.g., the primary power may originate from the power grid). The welding power supply 202a, 202b includes a power converter 710, which may include transformers, rectifiers, switches, and so forth, capable of converting the AC input power to AC and/or DC output power as dictated by the demands of the system (e.g., particular welding processes and regimes). The power converter 710 converts input power (e.g., the primary power 708) to welding-type power based on a weld voltage setpoint and outputs the welding-type power via a weld circuit.

In some examples, the power converter 710 is configured to convert the primary power 708 to both welding-type power and auxiliary power outputs. However, in other examples, the power converter 710 is adapted to convert primary power only to a weld power output, and a separate auxiliary converter is provided to convert primary power to auxiliary power. In some other examples, the power supply 202a, 202b receives a converted auxiliary power output directly from a wall outlet. Any suitable power conversion system or mechanism may be employed by the power supply 202a, 202b to generate and supply both weld and auxiliary power.

The power supply 202a, 202b includes a controller 712 to control the operation of the power supply 202a, 202b. The welding power supply 202a, 202b also includes a user interface 714. The controller 712 receives input from the user interface 714, through which a user may choose a process and/or input desired parameters (e.g., voltages, currents, particular pulsed or non-pulsed welding regimes, and so forth). The user interface 714 may receive inputs using any input device, such as via a keypad, keyboard, buttons, touch screen, voice activation system, wireless device, etc. Furthermore, the controller 712 controls operating parameters based on input by the user as well as based on other current operating parameters. Specifically, the user interface 714 may include a display 716 for presenting, showing, or indicating, information to an operator. The controller 712 may also include interface circuitry for communicating data to other devices in the system, such as the wire feeder. For example, in some situations, the power supply 202a, 202b wirelessly communicates with other welding devices within the welding system. Further, in some situations, the power supply 202a, 202b communicates with other welding devices using a wired connection, such as by using a network interface controller (NIC) to communicate data via a network (e.g., ETHERNET, 10BASE2, 10BASE-T, 100BASE-TX, etc.). In the example of Figure 7, the controller 712 communicates with the wire feeder via the weld circuit via a communications transceiver 718.

The controller 712 includes at least one controller or processor 720 that controls the operations of the welding power supply 702. The controller 712 receives and processes multiple inputs associated with the performance and demands of the system. The processor 720 may include one or more microprocessors, such as one or more "general-purpose" microprocessors, one or more special-purpose microprocessors and/or ASICS, and/or any other type of processing device. For example, the processor 720 may include one or more digital signal processors (DSPs).

The example controller 712 includes one or more storage device(s) 723 and one or more memory device(s) 724. The storage device(s) 723 (e.g., nonvolatile storage) may include ROM, flash memory, a hard drive, and/or any other suitable optical, magnetic, and/or solid-state storage medium, and/or a combination thereof. The storage device 723 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 724 may include a volatile memory, such as random access memory (RAM), and/or a nonvolatile memory, such as read-only memory (ROM). The memory device 724 and/or the storage device(s) 723 may store a variety of information and may be used for various purposes. For example, the memory device 724 and/or the storage device(s) 723 may store processor executable instructions 725 (e.g., firmware or software) for the processor 720 to execute. In addition, one or more control regimes for various welding processes, along with associated settings and parameters, may be stored in the storage device 723 and/or memory device 724, along with code configured to provide a specific output (e.g., initiate wire feed, enable gas flow, capture welding data, detect short circuit parameters, determine amount of spatter) during operation.

In some examples, the welding power flows from the power converter 710 through a weld cable 726. The example weld cable 726 is attachable and detachable from weld studs at each of the welding power supply 202a, 202b (e.g., to enable ease of replacement of the weld cable 726 in case of wear or damage). Furthermore, in some examples, welding data is provided with the weld cable 726 such that welding power and weld data are provided and transmitted together over the weld cable 726. The communications transceiver 718 is communicatively coupled to the weld cable 726 to communicate (e.g., send/receive) data over the weld cable 726. The communications transceiver 718 may be implemented based on various types of power line communications methods and techniques. For example, the communications transceiver 718 may utilize IEEE standard P1901.2 to provide data communications over the weld cable 726. In this manner, the weld cable 726 may be utilized to provide welding power from the welding power supply 202a, 202b to the wire feeder and the welding torch 108. Additionally or alternatively, the weld cable 726 may be used to transmit and/or receive data communications to/from the wire feeder and the welding torch 108. The communications transceiver 718 is communicatively coupled to the weld cable 726, for example, via cable data couplers 727, to characterize the weld cable 726, as described in more detail below. The cable data coupler 727 may be, for example, a voltage or current sensor.

In some examples, the power supply 202a, 202b includes or is implemented in a wire feeder.

The example communications transceiver 718 includes a receiver circuit 721 and a transmitter circuit 722. Generally, the receiver circuit 721 receives data transmitted by the wire feeder via the weld cable 726 and the transmitter circuit 722 transmits data to the wire feeder via the weld cable 726. As described in more detail below, the communications transceiver 718 enables remote configuration of the power supply 202a, 202b from the location of the wire feeder and/or compensation of weld voltages by the power supply 202a, 202b using weld voltage feedback information transmitted by the wire feeder. In some examples, the receiver circuit 721 receives communication(s) via the weld circuit while weld current is flowing through the weld circuit (e.g., during a welding-type operation) and/or after the weld current has stopped flowing through the weld circuit (e.g., after a welding-type operation). Examples of such communications include weld voltage feedback information measured at a device that is remote from the power supply 202a, 202b (e.g., the wire feeder) while the weld current is flowing through the weld circuit.

Example implementations of the communications transceiver 718 are described in U.S. Patent No. 9,012,807. However, other implementations of the communications transceiver 718 may be used.

The wire feeders 302, 508 may also include a communications transceiver 719, which may be similar or identical in construction and/or function as the communications transceiver 718.

In some examples, a gas supply 728 provides shielding gases, such as argon, helium, carbon dioxide, and so forth, depending upon the welding application. The shielding gas flows to a valve 730, which controls the flow of gas, and if desired, may be selected to allow for modulating or regulating the amount of gas supplied to a welding application. The valve 730 may be opened, closed, or otherwise operated by the controller 712 to enable, inhibit, or control gas flow (e.g., shielding gas) through the valve 730. Shielding gas exits the valve 730 and flows through a cable 732 (which in some implementations may be packaged with the welding power output) to the wire feeder which provides the shielding gas to the welding application. In some examples, the power supply 202a, 202b does not include the gas supply 728, the valve 730, and/or the cable 732.

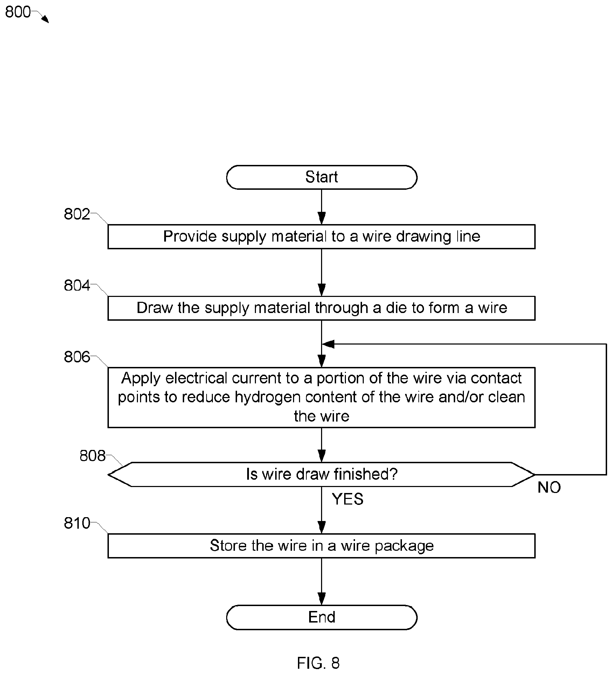

Figure 8 is a flowchart representative of an example method 800 to reduce hydrogen in a welding wire by heating the wire. The example method 800 may be used to implement any of the example systems 600, 650 of Figures 6A or 6B.

At block 802, a supply material is provided to a wire drawing line. For example, an operator may provide the supply spool 604 holding the supply material 612 (e.g., filament, metal strip) for drawing by the die 608.

At block 804, the wire drive(s) 606 draw the supply material (e.g., the filament 612) through the die 608 to form a wire 602. At block 806, the heating circuit 616 applies electrical current to a portion of the wire via the contact points 620, 622 to reduce hydrogen content of the wire 602.

At block 808, it is determined whether the wire draw is finished. For example, the wire draw may be finished when a threshold amount (e.g., weight, length, etc.) of wire 602 has been produced, and/or when the supply material has been exhausted. If the wire draw is not finished (block 808), control returns to block 808. When the wire draw is finished (block 808), at block 812 the wire 602 is stored in a wire package (e.g., on the finished spool). In some examples, the wire 602 is packaged such that exposure to hydrogen is limited, thereby maintaining the low hydrogen properties of the wire 602. The example method 800 then ends.

While applying the electrical current (block 806) performed during drawing of the wire 602 in the illustrated example, in other examples the applying of the electrical current is performed during storing of the wire in a wire package (e.g., as illustrated in Figure 6B).

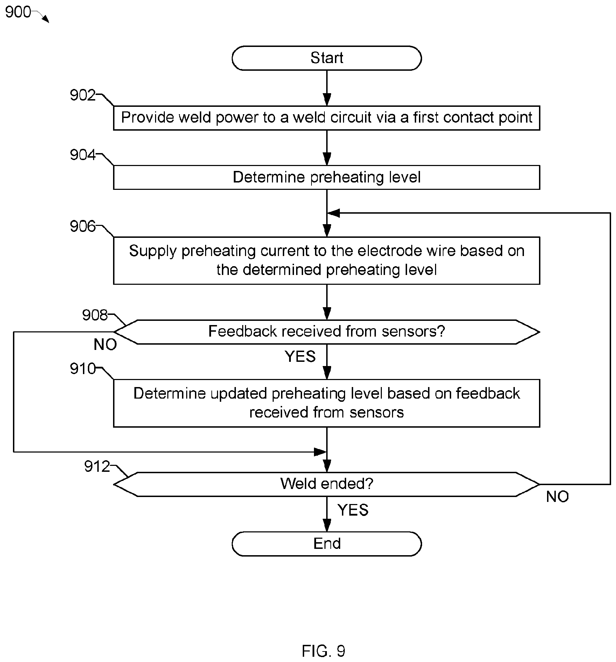

Figure 9 is a flowchart representative of an example method 900 to reduce hydrogen in a welding wire. The example method 900 may be used to implement any of the example systems 200-500 of Figures 2-5.

At block 902, a welding power supply (e.g., the welding power supply 202a of Figures 2-5) provides weld power to a weld circuit via a first contact point (e.g., the contact tip 218 of Figures 2-5).

At block 904, an electrode preheating control circuit (e.g., the electrode preheating control circuit 222) determines a preheat level. For example, the electrode preheating control circuit 222 may determine a target current, a target voltage, a target wattage, a target wire resistance, a target wire temperature, and/or a target enthalpy to be applied for preheating. The electrode preheating control circuit 222 may determine the preheating level based on, for example, a type of the welding-type electrode, a chemistry of the welding-type electrode, a wire diameter, or a gas composition.

At block 906, a preheating power supply (e.g., the preheating power supply 202b of Figures 2-5) supplies preheating current to the electrode wire based on the determined preheating level. At block 908, the electrode preheating control circuit 222 determines whether feedback has been received from one or more sensors. For example, the electrode preheating control circuit 222 may receive feedback signals from a temperature sensor, a hydrogen sensor, a moisture sensor, and/or any other type of sensor representative of the preheating state of the wire. If feedback has been received (block 908), at block 910 the electrode preheating control circuit 222 determines an updated the preheating level based on the feedback. For example, the electrode preheating control circuit 222 executing a voltage-controlled loop may adjust a target voltage based on the feedback. The preheating level does not necessarily change based on the feedback (e.g., if the present preheating level is appropriate).

If feedback has not been received (block 908), or after determining the updated preheating level (block 910), at block 912 the electrode preheating control circuit 222 determines whether the weld has stopped. If the weld is continuing (block 912), control returns to block 906. When the weld stops, the example method 900 ends.

In certain aspects, the torch may be used for resistive preheating applications where there is no arc after the preheated section. Further, handheld versions of the torch could be made for burning off hydrogen in flux cored arc welding applications, as well as other situations where ultra-low hydrogen would be desirable. Accordingly, a hydrogen sensor may be added to the torch to monitor the amounts of hydrogen being burnt off the electrode wire 114 or the amount that is going into the weld.

Some of the elements described herein are identified explicitly as being optional, while other elements are not identified in this way. Even if not identified as such, it will be noted that, in some embodiments, some of these other elements are not intended to be interpreted as being necessary, and would be understood by one skilled in the art as being optional.

## Claims

1. A method, comprising:
drawing (804) a supply material (612) through a die to form a wire (602);
applying (806) electrical current from a heating power supply (618) to a portion of the wire (602), the electrical current being controlled to maintain a constant wattage, wherein the applied electrical current heats the wire (602) to reduce a hydrogen content of the wire (602); and
removing hydrogen from a volume surrounding the point of application of the electrical current using a vent system (628).

2. The method as defined in claim 1, further comprising storing (810) the wire (602) in a wire package (610) after applying the electrical current.

3. The method as defined in claim 1, wherein the applying (806) of the electrical current to the portion of the wire (602) is in line with the drawing of the supply material (612) through the die; or
wherein the applying (806) of the electrical current to the portion of the wire (602) is performed in line with packaging (610) of the wire (602).

4. The method as defined in claim 1, wherein the drawing (804) of the supply material (612) through the die (608) and the applying (806) of the electrical current to the portion of the wire (602) are performed between a supply (604) of the supply material (612) and a storage (610) of a finished wire product (602).

5. The method as defined in claim 1, further comprising cleaning a lubricant from the wire (602) by applying the electrical current to heat the wire (602) to at least a threshold temperature determined by the lubricant.

6. A wire drawing system (600), comprising:
a die (608);
one or more drive rolls (606) configured to draw (804) a supply material (612) through the die (608) to form a wire (602);
a heating system (616), comprising:
at least two contact points (620, 622) configured to make electrical contact with the wire (602) formed using the die (608);
a heating power supply (618) configured to provide (806) electrical current to the wire (602) via the at least two contact points (620, 622) to heat the wire (602); and
a heating controller (524) configured to control the heating power supply (618) such that the electrical current is maintained at a constant wattage; and
a vent system (628) configured to remove hydrogen from a volume surrounding the heating system (616).

7. The wire drawing system (600) as defined in claim 6, wherein the at least two contact points (620, 622) are configured to make contact with the wire (602) in line with the die (608);
wherein the at least two contact points (620, 622) are configured to make contact with the wire (602) in line with packaging of the wire (602); or
wherein the drive rolls (606), the die (608), and the at least two contact points (620, 622) are positioned between a supply (604) of the supply material (612) and a storage (610) of a finished wire product (602).

8. The wire drawing system (600) as defined in claim 6, further comprising:
a heating controller (624) configured to control the heating power supply (618) using a current-controlled loop; or
a second die in line with the first die (608).

## Patentansprüche

1. Verfahren, aufweisend:
Ziehen (804) eines Zufuhrmaterials (612) durch eine Matrize, um einen Draht (602) zu bilden;
Anlegen (806) eines elektrischen Stroms von einer Heizleistungsversorgung (618) an einen Abschnitt des Drahts (602), wobei der elektrische Strom gesteuert wird, um eine konstante Wattleistung aufrechtzuerhalten, wobei der angelegte elektrische Strom den Draht (602) erwärmt, um einen Wasserstoffgehalt des Drahts (602) zu verringern; und
Entfernen von Wasserstoff aus einem Volumen, das den Punkt des Anlegens des elektrischen Stroms umgibt, unter Verwendung eines Entlüftungssystems (628).

2. Verfahren nach Anspruch 1, das ferner das Lagern (810) des Drahtes (602) in einem Drahtgehäuse (610) nach dem Anlegen des elektrischen Stroms aufweist.

3. Verfahren nach Anspruch 1, wobei das Anlegen (806) des elektrischen Stroms an den Abschnitt des Drahts (602) in Übereinstimmung mit dem Ziehen des Zufuhrmaterials (612) durch die Matrize erfolgt; oder
wobei das Anlegen (806) des elektrischen Stroms an den Abschnitt des Drahts (602) in Übereinstimmung mit dem Verpacken (610) des Drahts (602) durchgeführt wird.

4. Verfahren nach Anspruch 1, wobei das Ziehen (804) des Zufuhrmaterials (612) durch die Matrize (608) und das Anlegen (806) des elektrischen Stroms an den Abschnitt des Drahts (602) zwischen einer Zufuhr (604) des Zufuhrmaterials (612) und einer Lagerung (610) eines fertigen Drahtprodukts (602) durchgeführt werden.

5. Verfahren nach Anspruch 1, das ferner das Reinigen eines Schmiermittels von dem Draht (602) durch Anlegen des elektrischen Stroms aufweist, um den Draht (602) auf zumindest eine durch das Schmiermittel bestimmte Schwellentemperatur zu erwärmen.

6. Drahtziehsystem (600), aufweisend:
eine Matrize (608);
eine oder mehrere Antriebswalzen (606), die konfiguriert sind, ein Zufuhrmaterial (612) durch die Matrize (608) zu ziehen (804), um einen Draht (602) zu bilden;
ein Heizsystem (616), aufweisend:
zumindest zwei Kontaktpunkte (620, 622), die konfiguriert sind, einen elektrischen Kontakt mit dem Draht (602) herzustellen, der unter Verwendung der Matrize (608) gebildet wurde;
eine Heizleistungsversorgung (618), die konfiguriert ist, elektrischen Strom über die zumindest zwei Kontaktpunkte (620, 622) an den Draht (602) bereitzustellen (806), um den Draht (602) zu erwärmen; und
einen Heizregler (524), der konfiguriert ist, die Heizleistungsversorgung (618) so zu steuern, dass der elektrische Strom auf einer konstanten Wattleistung gehalten wird; und
ein Entlüftungssystem (628), das konfiguriert ist, Wasserstoff aus einem das Heizsystem (616) umgebenden Volumen zu entfernen.

7. Drahtziehsystem (600) nach Anspruch 6, wobei die zumindest zwei Kontaktpunkte (620, 622) konfiguriert sind, Kontakt mit dem Draht (602) in Übereinstimmung mit der Matrize (608) herzustellen;
wobei die zumindest zwei Kontaktpunkte (620, 622) konfiguriert sind, den Draht (602) in Übereinstimmung mit dem Verpacken des Drahts (602) zu kontaktieren; oder
wobei die Antriebsrollen (606), die Matrize (608) und die zumindest zwei Kontaktpunkte (620, 622) zwischen einer Zufuhr (604) des Zufuhrmaterials (612) und einer Lagerung (610) eines fertigen Drahtprodukts (602) positioniert sind.

8. Drahtziehsystem (600) nach Anspruch 6, ferner aufweisend:
einen Heizregler (624), der konfiguriert ist, die Heizleistungsversorgung (618) unter Verwendung einer stromgesteuerten Schleife zu steuern; oder
eine zweite Matrize in Übereinstimmung mit der ersten Matrize (608).

## Revendications

1. Procédé comprenant :
l'étirage (804) d'un matériau d'alimentation (612) à travers une filière pour former un fil (602) ;
l'application (806) d'un courant électrique à partir d'une alimentation électrique de chauffage (618) à une partie du fil (602), le courant électrique étant commandé pour maintenir une puissance constante, dans lequel le courant électrique appliqué chauffe le fil (602) pour réduire une teneur en hydrogène du fil (602) ; et
l'élimination de l'hydrogène d'un volume entourant le point d'application du courant électrique à l'aide d'un système d'évent (628) .

2. Procédé selon la revendication 1, comprenant en outre le stockage (810) du fil (602) dans un emballage fil (610) après l'application du courant électrique.

3. Procédé selon la revendication 1, dans lequel l'application (806) du courant électrique à la partie du fil (602) est en ligne avec l'étirage du matériau d'alimentation (612) à travers la filière ; ou
dans lequel l'application (806) du courant électrique à la partie du fil (602) est effectuée en ligne avec l'emballage (610) du fil (602).

4. Procédé selon la revendication 1, dans lequel l'étirage (804) du matériau d'alimentation (612) à travers la filière (608) et l'application (806) du courant électrique à la partie du fil (602) sont effectués entre une alimentation (604) du matériau d'alimentation (612) et un stockage (610) d'un produit de fil fini (602).

5. Procédé selon la revendication 1, comprenant en outre le nettoyage d'un lubrifiant du fil (602) par l'application du courant électrique pour chauffer le fil (602) à au moins une température seuil déterminée par le lubrifiant.

6. Système de tréfilage (600), comprenant :
une filière (608) ;
un ou plusieurs rouleaux d'entraînement (606) configurés pour étirer (804) un matériau d'alimentation (612) à travers la filière (608) pour former un fil (602) ;
un système de chauffage (616), comprenant :
au moins deux points de contact (620, 622) configurés pour établir un contact électrique avec le fil (602) formé à l'aide de la filière (608) ;
une alimentation électrique de chauffage (618) configurée pour fournir (806) un courant électrique au fil (602) via les au moins deux points de contact (620, 622) pour chauffer le fil (602) ; et
un dispositif de commande de chauffage (524) configuré pour commander l'alimentation électrique de chauffage (618) de sorte que le courant électrique est maintenu à une puissance constante ; et
un système d'évent (628) configuré pour retirer l'hydrogène d'un volume entourant le système de chauffage (616).

7. Système de tréfilage (600) selon la revendication 6, dans lequel les au moins deux points de contact (620, 622) sont configurés pour établir un contact avec le fil (602) en ligne avec la filière (608) ;
dans lequel les au moins deux points de contact (620, 622) sont configurés pour établir un contact avec le fil (602) en ligne avec l'emballage du fil (602) ; ou
dans lequel les rouleaux d'entraînement (606), la filière (608) et les au moins deux points de contact (620, 622) sont positionnés entre une alimentation (604) du matériau d'alimentation (612) et un stockage (610) d'un produit en fil fini (602).

8. Système de tréfilage (600) selon la revendication 6, comprenant en outre :
un dispositif de commande de chauffage (624) configuré pour commander l'alimentation électrique de chauffage (618) à l'aide d'une boucle commandée par courant ; ou
une seconde filière en ligne avec la première filière (608).
